# EUROPEAN PATENT APPLICATION

(11) **EP 2 233 821 A1**
(43) Date of publication of application: **29.09.2010**
(21) Application number: 08871438.1
(22) Date of filing: 21.10.2008
(51) Int. Cl.: F21S 2/00, F21V 23/00, F21V 23/06, G02F 1/1333, G02F 1/13357, H04N 5/64, F21Y 103/00

(54) **ILLUMINATING DEVICE, DISPLAY DEVICE AND TELEVISION RECEIVER**

(30) Priority: 22.01.2008 JP 2008011526
(71) Applicant: Sharp Kabushiki Kaisha, Osaka-shi, Osaka 545-8522 (JP)
(72) Inventor: KUNII Hiroshi, 545-8522 OSAKA (JP); KUROMIZU Yasumori, 545-8522 OSAKA (JP)
(74) Representative: Müller-Boré & Partner Patentanwälte
(86) International application number: PCT/JP2008/069032
(87) International publication number: WO 2009/093362

(57) **Abstract**

A lighting device 12 of the present invention includes a plurality of light sources 17, a power supply board 30 and a plurality of connectors 40. The power supply board 30 is configured to supply drive power to the light sources 17. The connectors 40 are provided for making electrical connections between the power supply board 30 and the light sources 17. The connectors 40 are arranged such that the adjacent connectors 40 are arranged in staggered layout. Namely, large space is provided between the adjacent connectors 40. This makes mounting work of the connectors easy and reduces electrical discharge between the connectors.

## Description

### TECHNICAL FIELD

The present invention relates to a lighting device, a display device and a television receiver.

### BACKGROUND ART

A liquid crystal panel included in a liquid crystal display device does not emit light, and thus a backlight device is required as a separate lighting device. The backlight device is arranged behind the liquid crystal panel (i.e., on a side opposite from a display surface side). It includes a metal or resin chassis having an opening on a liquid crystal panel side, a plurality of light emitting lamps (e.g., cold cathode tubes, which are linear light sources) as light sources, and an inverter for supplying power to the light emitting lamps. When cold cathode tubes, which are linear light sources, are used, an optical member that converts linear light into planar light is arranged on the light emitting side of the cold cathode tubes (see Patent Document 1).
Patent Document 1: Japanese Published Patent Application No. 2006-251587

### (Problem to be Solved by the Invention)

To make the liquid crystal display device thinner, which is the recent trend in the field, improvements in the backlight device are also required. To make the backlight device thinner, the gaps between the light emitting lamps and members around them need to be small. When cold cathode tubes are used as light emitting lamps, for example, the gaps between the cold cathode tubes and the optical member that is arranged on the light emitting side need to be small. When the gaps are decreased in size, linear light emitted from the cold cathode tubes is not properly converted into planar light by the optical member. Therefore, brightness varies from area to area where the cold cathode tubes are arranged or where they are not arranged. As a result, a shadow of the arrangement pattern of the cold cathode tubes 17 is projected on the liquid crystal display device. This decreases the display quality.

To reduce the projection of the shadow, a larger number of the cold cathode tubes should be installed and arranged closely in the thin backlight device so that the backlight device provides light with uniform brightness. In this case, connectors for electrically connecting the cold cathode tubes to an inverter are also arranged closely, which make the assembly work difficult and may cause electrical discharge between the connectors.

### DISCLOSURE OF THE PRESENT INVENTION

The present invention was made in view of the foregoing circumstances. An object of the present invention is to provide a lighting device in which appropriate space is provided between the adjacent connectors and thus high levels of work efficiency and safety are achieved. Another object of the present invention is to provide display device including such a lighting device and a television receiver including such a display device.

### (Means for Solving the Problem)

To solve the above problem, a lighting device of the present invention includes a plurality of light sources, a power supply board and a plurality of connectors. The power supply board is configured to supply drive power to the light sources. The connectors are mounted on the power supply board for making electrical connection between the light sources and the power supply board. Some of the connectors are aligned on a linear alignment line. At least one of the connectors arranged adjacent to any one of the connectors on the alignment line is arranged off the alignment line.

When at least one of the connectors arranged adjacent to any one of the connectors on the aliment line is arranged off the alignment line, the connector and the adjacent connector thereof are not aligned. Namely, large space is provided between the adjacent connectors in comparison to the connectors arranged in line and thus high levels of work efficiency and safety are achieved.
The connectors are provided for electrically connecting the light sources to the power supply board and thus one connector is required for one unit of light sources. Therefore, an arrangement of the connectors is defined based on the arrangement of the light sources. In a thin lighting device, a large number of light sources should be installed so that a shadow of an arrangement pattern of the light sources is not produced by illumination light. In such a case, the light sources are arranged at small intervals. Because areas of the power supply board in which the connectors can be mounted are limited, the connectors for the light sources are also arranged at small intervals. Namely, the adjacent connector may be an obstacle for the mounting work of the connectors on the power supply board. This makes the mounting work difficult. Further, electrical discharge may occur between the connectors if the interval between them is small.
According to the lighting device of the present invention, any one of the connectors and adjacent connectors thereof are not aligned. Therefore, even in the thin lighting device, relatively large space is provided between the connectors. This makes the mounting work of the connectors easy and reduces electrical discharge between the connectors.

A preferable arrangement of the connectors is that the one of the connectors on the alignment line and the adjacent connectors are arranged in a staggered layout. More preferably, the connectors are arranged alternately in the staggered layout. With such a configuration, the connectors are arranged at even larger intervals within the limited space.

Each connector having such a configuration includes the first connector part mounted on the power supply board and the second connector part attached to the first connector part. The second connector part can be removed from the first connector part in a direction perpendicular to a board surface of the power supply board.

According to the connectors having such a configuration, each second connector part is held and brought close to the corresponding first connector part in a direction perpendicular to the board surface of the power supply board during the attachment thereof to the first connector part. When the attachment is done manually, the second connector part is held with fingers at ends thereof. The fingers that hold the second connector part may touch the adjacent connector that is already mounted if the first connector parts are mounted with a small gap therebetween, that is, the adjacent connector may be an obstacle for the attachment work. When removing the second connector part from the first connector part, the second connector part needs to be held by fingers but the adjacent connector may be in the way.
According to the lighting device of the present invention, large space is provided between the connectors. Therefore, the attachment or removal of the second connector part to or from the first connector part can be easily done without the adjacent connectors being in the way.

Further, each second connector part has stoppers in end areas thereof so as to engage with the corresponding first connector part with elastic flexibility.
During the attachment of the second connector part to the first connector part, the ends of the second connector part having the stoppers are held such that a force is applied to the stoppers to be elastically bent. If the first connector parts are arranged closely, the above attachment work is difficult. The arrangement of the connectors according to the present invention is even more effective for such a case.

The lighting device further includes harnesses extending from the connectors for making electrical connection between the connectors and the light sources. Each harness has a loop that is a part thereof formed in a loop and the size of the loop is variable.

Even when the distances between the light sources and the connectors are not all the same, the lengths of the harnesses can be adjusted by changing the sizes of the loops.
Because the connectors are arranged in the staggered layout on the power supply board, the distances between the light sources and the connectors are not all the same. Preparing harnesses in different lengths for the different distances between the light sources and the connectors increases cost related to the harnesses. If the harnesses with a length corresponding to the maximum distance between the light sources and the connectors are used, the harness connected between the light sources and the connectors provided at the minimum distance will have an extra portion. If the extra portion is caught between other components during assembly work, the wire may be broken.
According to the present invention, the lengths of the harnesses can be adjusted by changing the sizes of the loops. Even when the distances between the light sources and the connectors are not the same, different sizes of harnesses are not required. The lengths of the harnesses can be adjusted and thus the harnesses in the same size can be used for making connection between the light sources and the connectors provided at different distances. This reduces the cost related to the harnesses and thus the cost of the lighting device can be reduced.

The power supply board includes a first board and a second board on which the connectors are mounted and a regulator circuit and a driver circuit are provided. The regulator circuit is configured to adjust a current balance between the light sources, and the driver circuit is configured to supply drive power to the light sources. The regulator circuit includes at least two sections provided on the first board and the second board, respectively. The driver circuit is provided on the first board on which one of the sections of the regulator circuit is provided.

The regulator circuit is configured to adjust a current balance between the light sources. For different arrangement patterns of the light sources (e.g., the different number of the light sources), different patterns are also required in the regulator circuit. According to the configuration of the present invention, the regulator circuit includes at least two sections, one on the first board and the other on the second board. Therefore, even when the number of the light sources is changed according to the size of the lighting device, only the second board needs to be replaced by another board having different circuit patterns. Namely, the first board including the regulator circuit and the driver circuit can be used in any size of the backlight device. This improves work efficiency and contributes to a cost reduction.

The configuration of the present invention is effective in the case that the light sources are arranged at small intervals. The configuration of the present invention is preferably applied for a lighting device in which light sources are arranged with a small pitch of 10 mm to 24 mm intervals. They are more preferably applied for a lighting device in which light sources are arranged with even smaller pitch of 10 mm to 17 mm. Especially in a thin lighting device, a large number of light sources should be arranged so that a shadow of an arrangement pattern of the light sources is not produced by illumination light. In this case, the light sources are arranged at small intervals and thus the configuration of the present invention is effective.

Further, to solve the above problem, a display device of the present invention includes the lighting device that is described above and a display panel for providing display using light from the lighting device.
Because the display device includes the lighting device with a high level of safety manufactured with high work efficiency, cost of the display device can be reduced while safety is ensured.

The display panel is a liquid crystal panel using liquid crystal, for example. The display device including the liquid crystal panel can be used for various applications of liquid crystal display devices such as a television and a computer monitor. This display device is especially preferable for a large screen application.

A television receiver of the present invention includes the above-described display device.
Because the display device included in the television receiver is provided with a high level of safety at low cost, the television receiver is provided with a high level of safety at low cost.

### (Effect of the Invention)

According to the lighting device of the present invention, a sufficient size of space is provided between the connectors even in the thin lighting device. Therefore, high levels of work efficiency and safety can be achieved. According to the display device of the present invention, the display device can be provided with safety at low cost even when the thickness thereof is reduced. According to the television receiver of the present invention, the television receiver can be provided with safety at low cost even when the thickness thereof is reduced.

### BRIEF DESCRIPTION OF THE DRAWINGS

[FIG. 1] is an exploded perspective view illustrating a general construction of a television receiver according to an embodiment of the present invention;
[FIG. 2] is an exploded perspective view illustrating a general construction of a liquid crystal display device in FIG. 1;
[FIG. 3] is a cross-sectional view of the liquid crystal display device in FIG. 2 along the short-side direction;
[FIG. 4] is a cross-sectional view of the liquid crystal display device in FIG. 2 along the long-side direction;
[FIG. 5] is a plan view illustrating an inverter board set included in the liquid crystal display device in FIG. 2;
[FIG. 6] is a plan view illustrating a regulator board included in the invert board set in FIG. 5;
[FIG. 7] is a top view of one of the first connector parts arranged on the regulator board set;
[FIG. 8] is a side view of the first connector part in FIG. 7;
[FIG. 9] is a bottom view of one of the second connector parts;
[FIG. 10] is a side view of the second connector part in FIG. 9;
[FIG. 11] is a schematic view for explaining a function of a loop formed by a part of a harness extending from the connector;
[FIG. 12] is a schematic view for explaining a function of a loop formed by a part of a harness;
[FIG. 13] is a plan view illustrating configuration of an inverter board set included in a backlight device according to the second embodiment of the present invention;
[FIG. 14] is a plan view illustrating the first board of the inverter board set in FIG. 13;
[FIG. 15] is a plan view illustrating the second board of the inverter board set in FIG. 13;
[FIG. 16] is a plan view illustrating a board that can be used instead of the second board in FIG. 15;
[FIG. 17] is a plan view illustrating modifications of the arrangements of the first and the second boards;

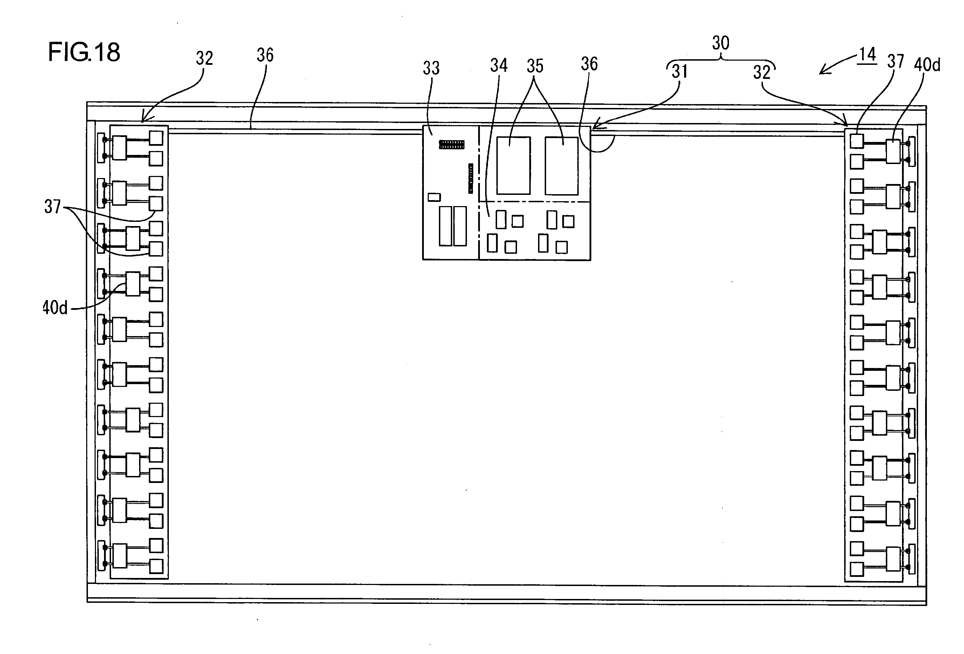

[FIG. 18] is a plan view illustrating modifications of the arrangements of the connectors;
[FIG. 19] is a plan view illustrating modifications of the arrangements of the connectors;
[FIG. 20] is a plan view illustrating modifications of the arrangements of the connectors; and
[FIG. 21] is a plan view illustrating modifications of the arrangements of the connectors.

### Explanation of Symbols

10: Liquid crystal display device (Display device), 11: Liquid crystal panel (Display panel), 12: Backlighting device (Lighting device), 17: Cold cathode tube (Light source), 30: Inverter board set (Power supply board), 40: Connector, 41: First connector part, 42: Second connector part, 44: Stopper, 50: Harness, 51: Loop, 61: First board, 62: Second board, 63; Driver circuit, 64: Regulator circuit, TV: Television receiver.

### BEST MODE FOR CARRYING OUT THE INVENTION

### <First embodiment>

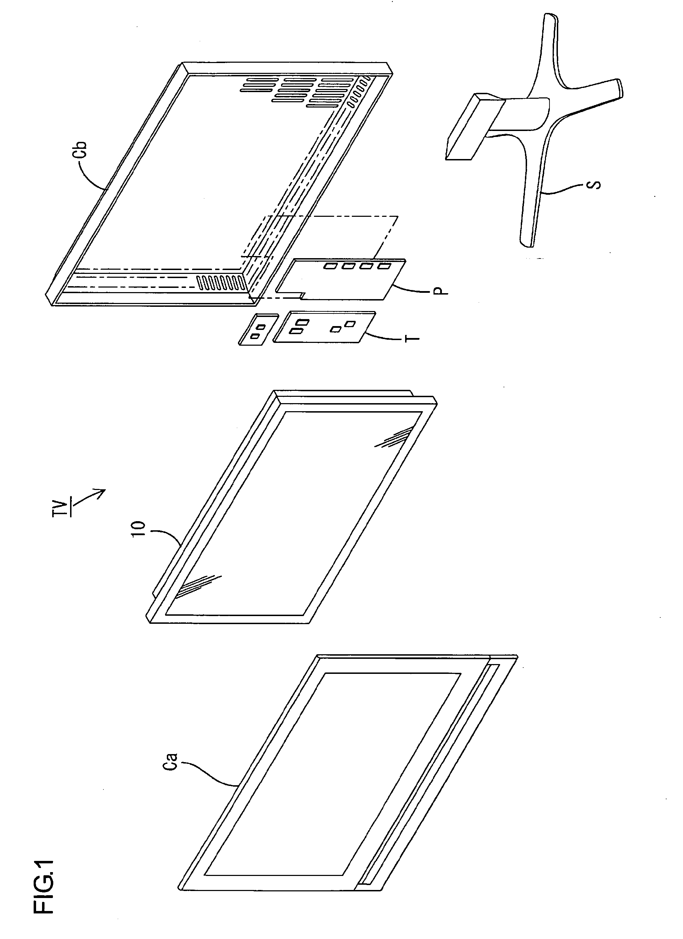

The first embodiment of the present invention will be explained with reference to FIGS. 1 to 12.
First, a television receiver TV including a liquid crystal display device 10 will be explained.

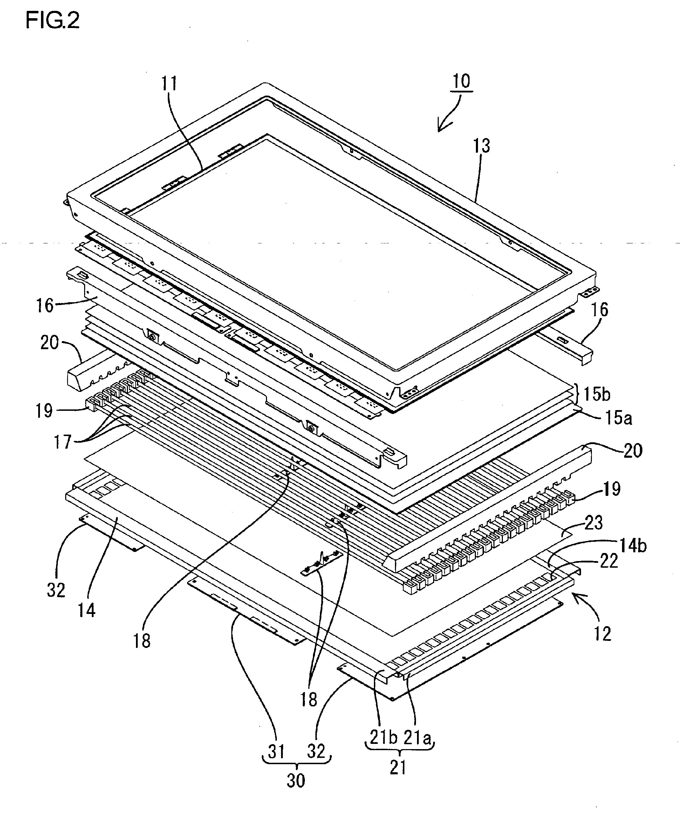

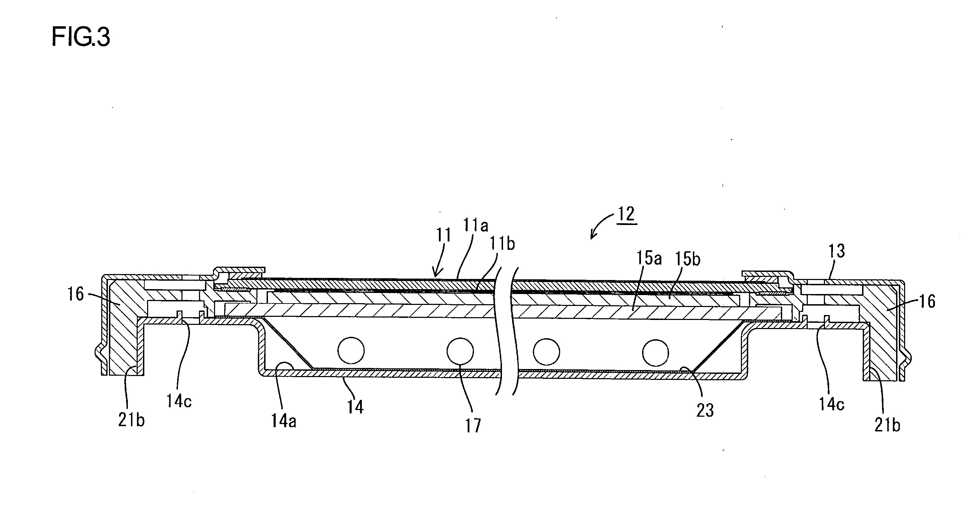

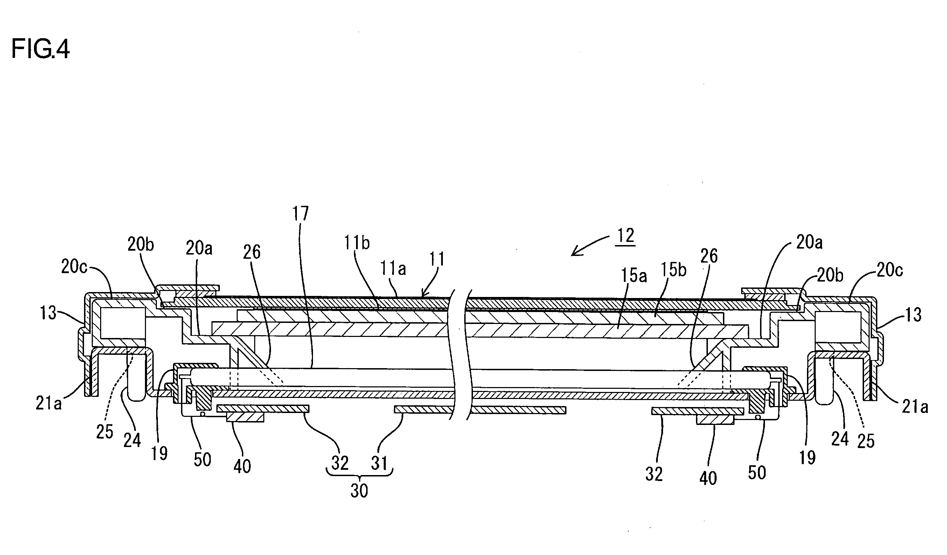

FIG. 1 is an exploded perspective view illustrating a general construction of the television receiver of this embodiment. FIG. 2 is an exploded perspective view illustrating a general construction of the liquid crystal display device 10. FIG. 3 is a cross-sectional view of the liquid crystal display device in FIG. 2 along the short-side direction. FIG. 4 is a cross-sectional view of the liquid crystal display device in FIG. 2 along the long-side direction.

As illustrated in FIG. 1, the television receiver TV of the present embodiment includes the liquid crystal display device 10, front and rear cabinets CA, CB that house the liquid crystal display device 10 therebetween, a power source P, a tuner T and a stand S. An overall shape of the liquid crystal display device (display device) 10 is a landscape rectangular. The liquid crystal display device 10 is housed in a vertical position such that a short-side direction thereof matches a vertical line. As illustrated in FIG. 2, it includes a liquid crystal panel 11 as a display panel, and a backlight device 12 (lighting device), which is an external light source. They are integrally held by a bezel 13 and the like.

Next, the liquid crystal panel 11 and the backlight device 12 included in the liquid crystal display device 10 will be explained (see FIGS. 2 to 4).
The liquid crystal panel (display panel) 11 is constructed such that a pair of glass substrates is bonded together with a predetermined gap therebetween and liquid crystal is sealed between the glass substrates. On one of the glass substrates, switching components (e.g., TFTs) connected to source lines and gate lines that are perpendicular to each other, pixel electrodes connected to the switching components, and an alignment film are provided. On the other substrate, counter electrodes, color filter having color sections such as R (red), G (green) and B (blue) color sections arranged in a predetermined pattern, and an alignment film are provided. Polarizing plates 11a, 11b are attached to outer surfaces of the substrates (see FIGS. 3 and 4).

As illustrated in FIG. 2, the backlight device 12 includes a chassis 14, a diffuser plate 15a, a plurality of optical sheets 15b and frames 16. The chassis 14 has a substantially box-shape and an opening 14b on the light emitting side (on the liquid crystal panel 11 side) . The diffuser plate 15a are arranged so as to cover the opening 14b of the chassis 14. The optical sheets 15b are arranged between the diffuser plate 15a and the liquid crystal panel 11. The frames 16 arranged along the long sides of the chassis 14 holds the long-side edges of the diffuser plate 15a to the chassis 14. The long-side edges of the diffuser plate 15a are sandwiched between the chassis 14 and the frames 16. Cold cathode tubes (light sources) 17, lamp clips 18, relay connectors 19 and lamp holders 20 are installed in the chassis 14. The lamp clips 18 are provided for mounting the cold cathode tube 17 to the chassis 14. The relay connectors 19 are connected to ends of the cold cathode tubes 17 for making electrical connection. The lamp holders 20 collectively cover ends of the cold cathode tubes 17 and the relay connectors 19. A light emitting side of the backlight device 12 is a side closer to the diffuser plate 15a than the cold cathode tubes 17.

The chassis 14 is prepared by processing a metal plate. It is formed in a substantially shallow box shape with a depth of 8.0 mm. It includes a rectangular bottom plate 14a and outer rim portions 21, each of which extends upright from the corresponding side of the bottom plate 14a and has a substantially U shape. The outer rim portions 21 include short-side outer rim portions 21a and long-side outer rim portions 21 provided at the short sides and the long sides of the chassis 14, respectively. The bottom plate 14a has a plurality of through holes, that is, mounting holes 22, along the long-side edges thereof. The relay connectors 19 are mounted in the mounting holes 22. As illustrated in FIG. 3, fixing holes 14c are provided on the upper surface of the chassis 14 along the long-side outer rims 21b to bind the bezel 13, the frames 16 and the chassis 14 together with screws and the like.

A light reflecting sheet 23 is disposed on an inner surface of the bottom plate 14a of the chassis 14 (on a side that faces the cold cathode tubes 17). The light reflecting sheet 23 is a synthetic resin sheet having a surface in white color that provides high light reflectivity. It is placed so as to cover almost entire inner surface of the bottom plate 14a of the chassis 14. As illustrated in FIG. 3, long-side edges of the light reflecting sheet 23 are lifted so as to cover the long-side outer rims 21b of the chassis 14 and sandwiched between the chassis 14 and the diffuser plate 15a. With this light reflecting sheet 23, light emitted from the cold cathode tubes 17 is reflected toward the diffuser plate 15a. On the outer surface of the bottom plate 14a of the chassis 14 (on a side opposite from the cold cathode tubes 17), the inverter board set 30 is provided for supplying power to the cold cathode tubes 17.

On the opening 14b side of the chassis 14, the diffuser plate 15a and the optical sheets 15b are provided. The diffuser plate 15a includes a synthetic resin plate containing scattered light diffusing particles. It diffuses linear light emitted from the cold cathode tubes 17. The short-side edges of the diffuser plate 15a are placed on the first surface 20a of the holder 20 as described above, and does not receive a vertical force. As illustrated in FIG. 3, the long-side edges of the diffuser plate 15a are sandwiched between the chassis 14 (more precisely the reflecting sheet 23) and the frame 16 and fixed.

The optical sheets 15b provided on the diffuser plate 15a includes a diffuser sheet, a lens sheet and a reflecting type polarizing plate layered in this order from the diffuser plate 15a side. Light emitted from the cold cathode tubes 17 passes through the diffuser plate 15a and enters the optical sheets 15b. The optical sheets 15b are provided for converting the light to planar light. The liquid crystal display panel 11 is disposed on the top surface of the top layer of the optical sheet 15b. The optical sheet 15b are held between the diffuser plate 15a and the liquid crystal panel 11.

Each cold cathode tube 17 has an elongated tubular shape. A plurality of the cold cathode tubes 17 (twenty tubes in this embodiment) are installed in the chassis 14 such that they are arranged parallel to each other with the long-side direction thereof (the axial direction) aligned along the long-side direction of the chassis 14 (see FIG. 2). Each end of each cold cathode tube 17 has a terminal (not shown) for receiving drive power and is fitted in the corresponding relay connector 19. The holders 20 are mounted so as to cover the relay connectors 19.

In this embodiment, sizes of the cold cathode tubes 17 and their arrangements are defined as follows. The diameter of each cold cathode tube 17 used in this embodiment is 4.0 mm. The distance between the cold cathode tubes 17 and the light reflecting sheet 23 is 0.8 mm. The distance between the adjacent cold cathode tubes 17 is 16.4 mm. The distance between the cold cathode tubes 17 and the diffuser plate 15a is 2.7mm. In this backlight device 12, distances between the components are defined so as to reduce the thickness of the backlight device 12. Especially, the distance between the cold cathode tubes 17 and the diffuser plate 15a and the distance between the cold cathode tubes 17 and the reflecting sheet 23 are reduced. Because of the thickness reduction of the lighting device 12, the liquid crystal display device 10 and that of the television receiver TV are provided with the following thicknesses. The thickness of the liquid crystal display device 10 (i.e., the thickness between the front surface of the liquid crystal panel 11 and the back surface of the backlight device 12) is 16 mm. The thickness of the television receiver TV (i.e., and the thickness between the front surface of the front cabinet Ca and the back surface of the rear cabinet Cb) is 34 mm. Namely, a thin television receiver is provided.

The holders 20 that cover the ends of the cold cathode tubes 17 are made of white synthetic resin. Each of them has an elongated substantially box shape that extends along the short side of the chassis 14. As illustrated in FIG. 4, each holder 20 has steps on the front side such that the diffuser plate 15a and the liquid crystal panel 11 are held at different levels. A part of the holder 20 is placed on top of a part of the corresponding short-side outer rim 21a of the chassis 14 and forms a side wall of the backlight device 12 together with the short-side outer rim 21a. An insertion pin 24 projects from a surface of the holder 20 that faces the outer rim 21a of the chassis 14. The holder 20 is mounted to the chassis 14 by inserting the insertion pin 24 into the insertion hole 25 provided in the top surface of the short-side outer rim 21a of the chassis 14.
The steps of the holder 20 include three surfaces parallel to the bottom plate 14a of the chassis 14. The short edge of the diffuser plate 15a is placed on the first surface 20a located at the lowest level. A sloped cover 26 extends from the first surface 20a toward the bottom plate 14a of the chassis 14. A short edge of the liquid crystal panel 11 is placed on the second surface 20b. The third surface 20c located at the highest level is provided such that it overlaps the short-side outer rim 21a of the chassis 14 and comes in contact with the bezel 13.

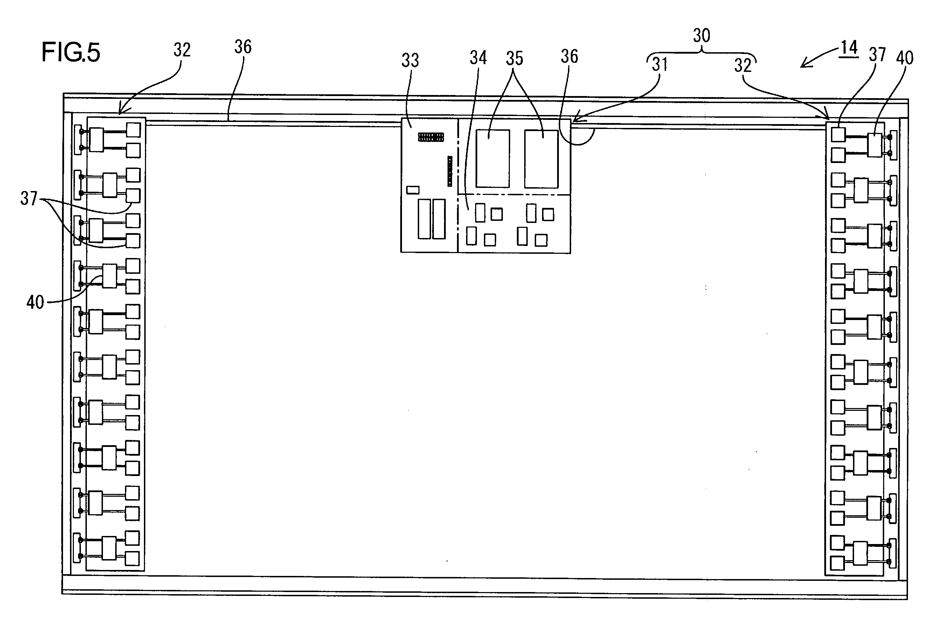

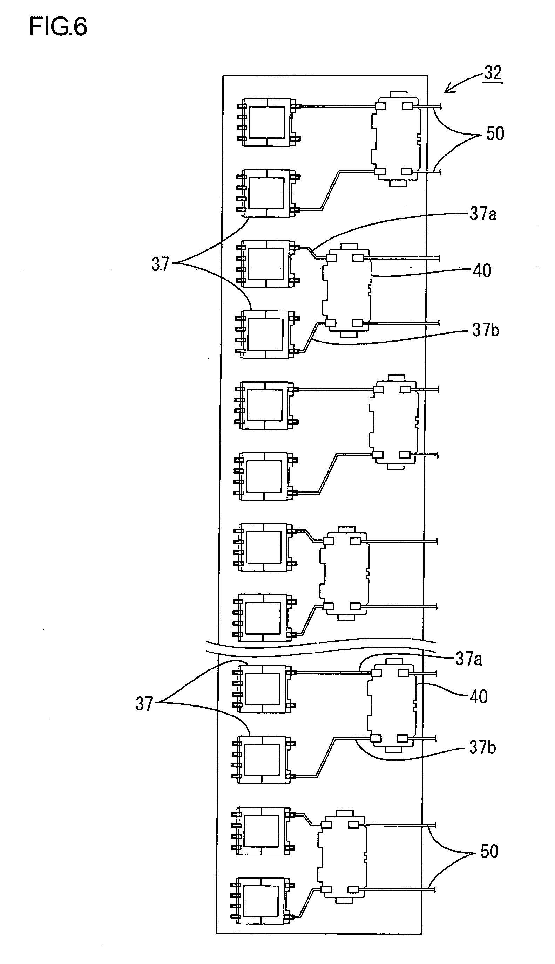

Next, the inverter board set (the power supply board) 30 arranged on the back surface of the chassis 14 will be explained with reference to FIGS. 5 and 6.
FIG. 5 is a plan view illustrating a configuration of the invert board set. FIG. 6 is a plan view illustrating a configuration of regulator boards included in the invert board set.
The inverter board set 30 is mounted to the rear surface of the bottom plate 14a of the chassis 14 (i.e., on the side opposite from the side on which the cold cathode tubes 17 are arranged). It supplies power to the cold cathode tubes 17 and controls on-off operation thereof. As illustrated in FIG. 5, the inverter board set 30 includes the driver board 31 arranged around the center of the long side of the chassis 14 and the regulator boards 32 arranged near the long-side ends of the chassis 14 (so as to overlap the respective ends of the cold cathode tubes 17).

The driver board 31 is arranged around the center of the long-side of the chassis 14 and off the center of the short-side of the chassis 14. The driver board 31 includes a control circuit 33, a switching circuit 34 and a high voltage generator 35. The control circuit 33 is configured to output a control signal to generate a predetermined frequency for controlling an output of the drive power supplied to the cold cathode tubes 17. The switching circuit 34 is configured to switch supply of the drive power to change directions of current that flows through the high voltage generator 35 based on the control signal. The high voltage generator 35 is configured to output the drive power generated at a voltage higher than an input voltage. High voltage lines 36 extend from the driver board 31 to the regulator boards 32 for supplying the drive power. The high voltage lines 36 are wrapped with insulating materials and arranged along the long side of the chassis 14 away from the chassis 14.

Each regulator board 32 has a rectangular shape. It is arranged such that the long-side direction thereof matches the short-side direction of the chassis 14. As illustrated in FIG. 6, flux couplers 37, one for each cold cathode tube 17 (i.e., twenty of them), are arranged along the long-side edge on the inner side of the chassis 14. Flux couplers 37 are configured to adjust a balance of currents supplied to the corresponding cold cathode tube 17. Connectors 40 that are connected to electrical wires 37a, 37b extending from the flux couplers 37 are arranged along the other long-side edge on the outer side of the chassis 14. The connectors 40 make electrical connection between the driver board 31 and the cold cathode tubes 17. In this embodiment, each regulator board 32 includes a circuit for maintaining the balance of the currents supplied to the light sources by connecting the cold cathode tubes 17 using the flux couplers 51 such that a secondary current flows in series. However, it may include a circuit in which current transformers are connected in tournament tree structure for shunt of the light source currents using flux couplers or a circuit in which ballast components are arranged.

The connectors 40 are arranged along the long-side direction of the regulator board 32 such that each of them overlaps ends of two cold cathode tubes 17. The connectors 40 are arranged in staggered layout such that the adjacent connectors 40, 40 are not aligned along the short-side direction of the regulator boards 32 (i.e., the long-side direction of the chassis 14). Specifically, the first connector 40 on each regulator board 32 is arranged close to the outer edge of the long side of the regulator board 32. The second connector 40 is arranged adjacent to the first connector 40 on the regulator board 32 further inside than the first connector 40 by the width of the connector 40. The third connector 40 is arranged close to the outer edge of the long side of the regulator board 32, that is, in line with the first connector 40. When an alignment line of the second connector 40 (on which the second, the fourth, the sixth, ... connectors, are arranged) is taken as a reference, the first and the third connectors 40 are off the alignment line.

When the connectors 40 are arranged in the above manner, the closest connectors 40 to any one of the connectors 40 are not present on either side of the connector 40 and space is present on either side of the connector 40. The connectors 40 are arranged alternately in two lines on the long edge side and the inner side along the long side of each regulator board 32. Namely, the connectors 40 are arranged in a zigzag pattern along the long side direction of each regulator board 32 (i.e. , the short side of the chassis 14).

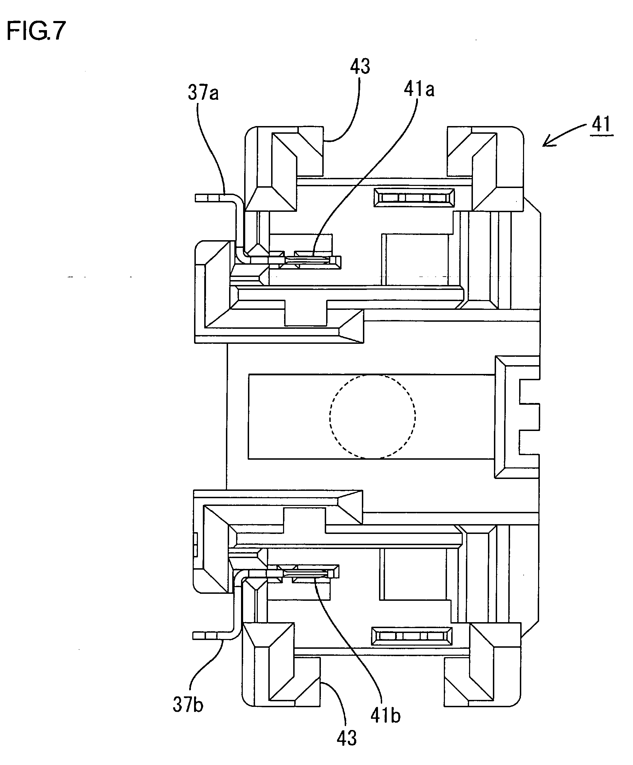

Next, a configuration of the connectors 40 will be explained with reference to FIGS. 7 to 10.

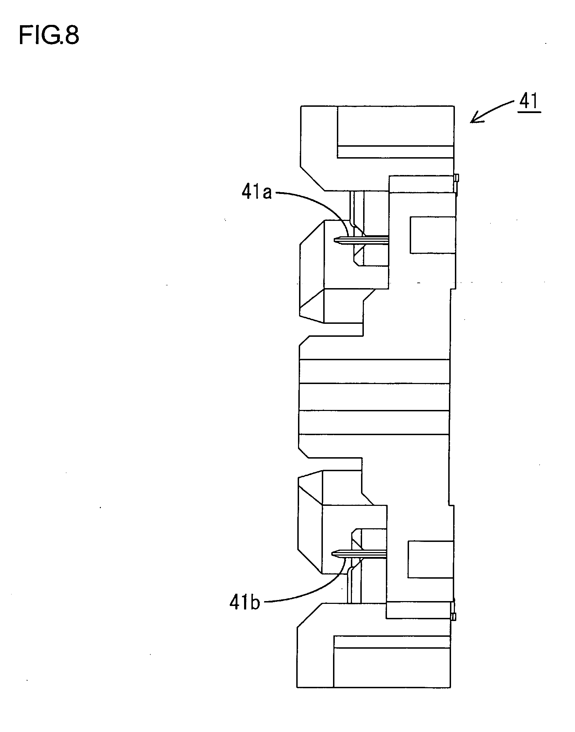

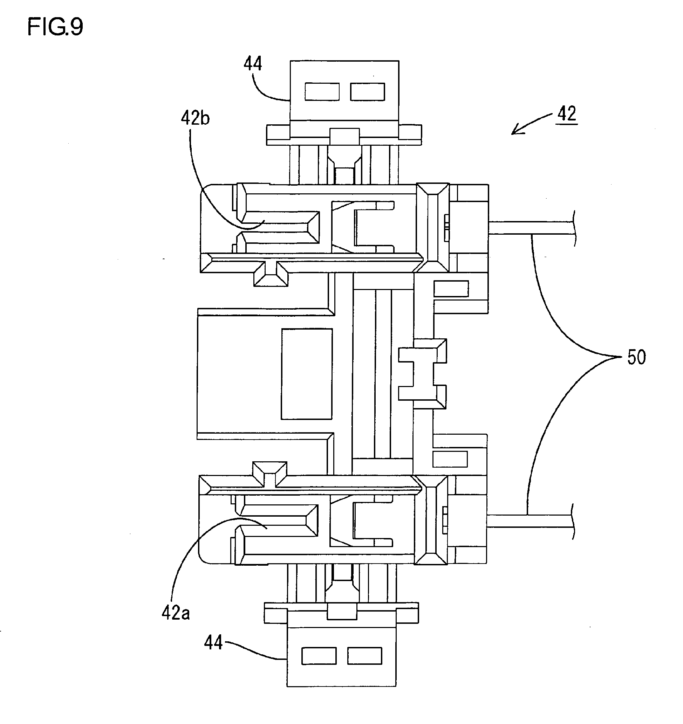

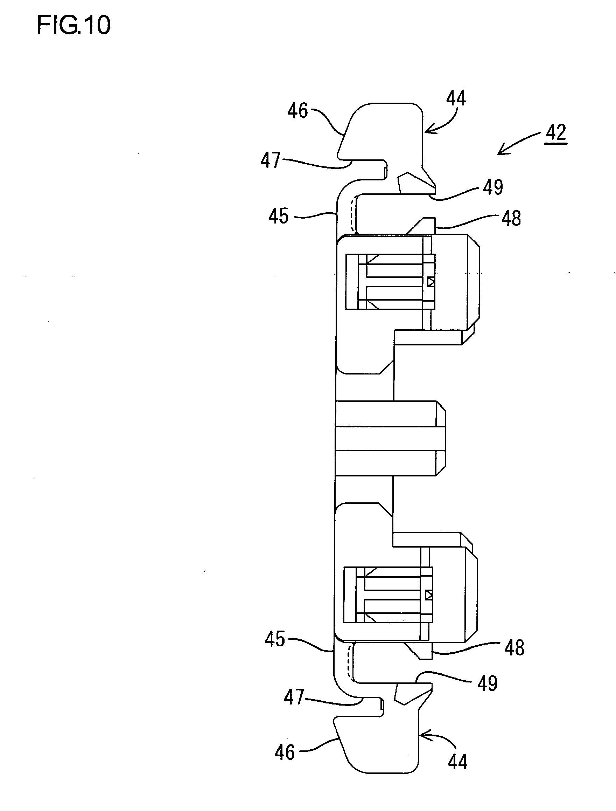

FIG. 7 is a top view of one of the first connector parts of the connectors. FIG. 8 is a side view of the first connector part in FIG. 7. FIG. 9 is a bottom view of one of the second connector parts. FIG. 10 is side view of the second connector part in FIG. 9.
The connectors 40 include the first connector parts 41 and the second connector parts 42. The first connector parts 41 are fixed to the regulator boards 32 and the second connector parts 42 are attached to the first connector parts 41. The second connector parts 42 can be removed from the first connector parts 41. Each first connector part 41 is made of resin and formed in a flat plate-like overall shape. As illustrated in FIGS. 7 and 8, it includes metal terminals 41a, 41b to which the electrical wires 37a, 37b extending from the corresponding flux couplers 37 are connected, respectively. Each of the terminals 41a, 41b includes two metal plates stand substantially upright from a flat surface of the first connector part 41 such that the electrical wire 37a or 37b is sandwiched therebetween (see FIG. 8).

Each second connector part 42 is made of resin and formed in a flat plate-like overall shape. As illustrated in FIGS. 9 and 10, it has metal receptacle terminals 42a, 42b having recesses for receiving the terminals 41a, 41b of the first connector part 41, respectively. Namely, the terminals 41a, 41b of the first connector part 41 are inserted in the receptacle terminals 42a, 42b,respectively, and electrically connected.

Further, each second connector part 42 has side walls that face to the short sides of the regulator board 32 and has stoppers 44 on the side walls. The stoppers 44 are inserted in respective stopper receptacles 43 of the first connector part 41. Each stopper 44 includes a support portion 45 having a plate like shape and a grip portion 46 having a cantilever shape. The support portion 45 continues from the top surface of the second connector part 42 and an end thereof is curved downward. The grip portion 46 continues from the distal end of the support portion 45. A recess 47 is provided between the support portion 45 and the grip portion 46. It has an opening in the top surface of the second connector part 42. The second connector part 42 further includes a protrusion 48 having a substantially triangular prism-like shape below the support portion 45. An opening 49 is provided between the protrusion 48 and the support portion 45. The stopper 44 is made of resin and elastically flexible.

Each second connector part 42 is attached to the corresponding first connector part 41 as follows. First, the stoppers 44 of the second connector part 42 are held with fingers such that the bottom surface of the second connector part 42 (see FIG. 9) faces the top surface of the first connector part 41 fixed to the regulator board 32 (see FIG. 7). When a gripping force is applied to the stoppers 44, the following elastic change occurs. When the gripping force is applied to the grip portions 46, they are pushed so as to close the openings of the recesses 47. As a result, the support portions 45 are bent away from the side walls of the second connector part 42 and the widths of openings 49 become larger. While the second connector part 42 is held in that manner, it is brought down in a substantially vertical direction, that is, in a direction substantially perpendicular to the surface of the inverter board 30 and brought closer to the top surface of the first connector part 41. Then, the stoppers 44 of the second connector part 42 are inserted in the stopper receptacles 43 of the first connector part 41. By releasing the fingers from the second connector part 42, the widths of the openings 49 become smaller due to elastic restoring force created by the stoppers 44. Therefore, the second connector part 42 is less likely to come off of the first connector part 41. The attachment of the second connector part 42 to the first connector part 41 is complete.

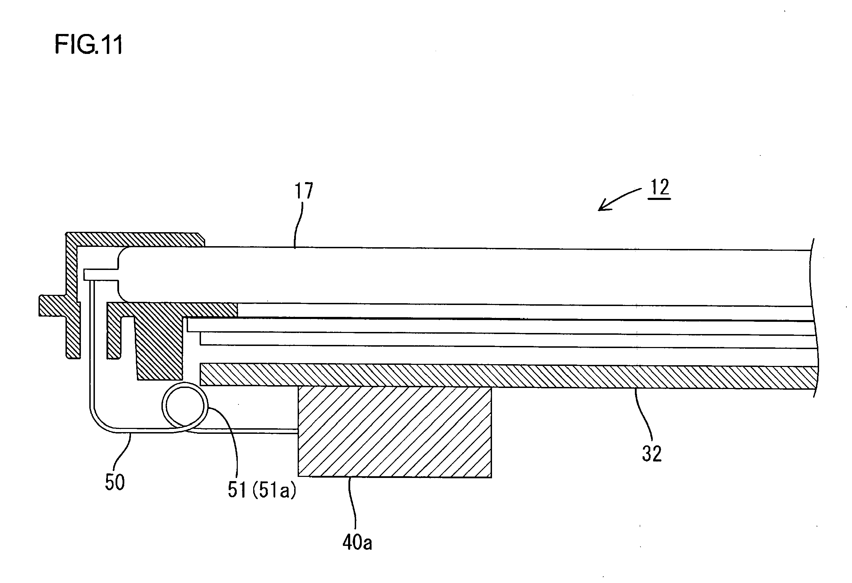

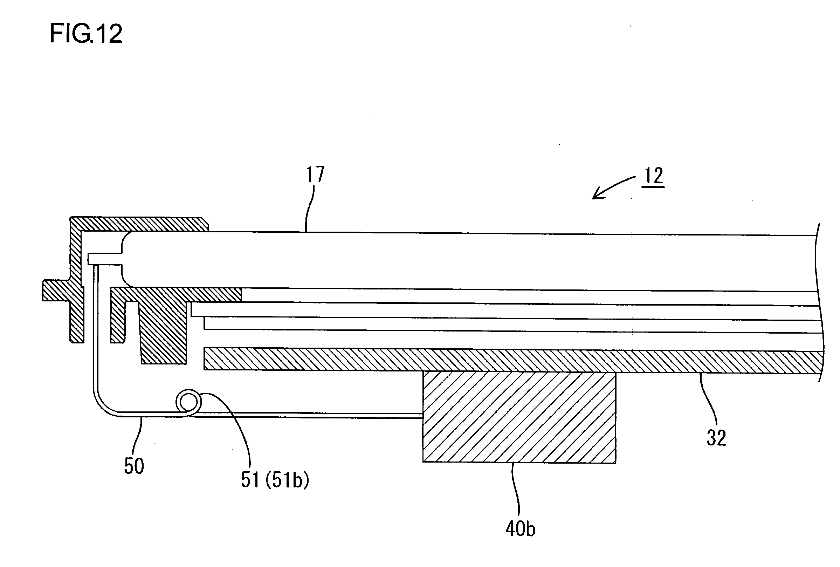

Two harnesses 50 extend from side walls of each one of the second connector parts 42 located on an outer edge side of the inverter board set 30. The harnesses 50 are connected to the receptacle terminals 42a, 42b. The distal ends of the harnesses 50 are connected to the terminals provided at the ends of the cold cathode tube 17, respectively, inside the relay connector 19. One connector 40 is connected to two cold cathode tubes 17. The harnesses 50 function as electrical lines for supplying power from the driver board 31 to the cold cathode tube 17 via the high voltage line 36, the flux coupler 37, the connector 40 and the harness 50. Each harness 50 has a loop 51 (51a, 51b) between the second connector part 42 and the relay connector 18 (see FIGS. 11 and 12). A part of the harness 50 is looped to form the loop 51.

The television receiver TV, the liquid crystal display device 10 and the backlight device 12 of the present embodiment including the above-described configurations provide the following operational effects.
The inverter board set 30 included in the backlight device 12 of the present invention includes a plurality of the connectors 40 for making electrical connections between the inverter board set 30 and the cold cathode tubes 17. The connectors 40 are arranged such that the adjacent connectors 40 are arranged in staggered layout, that is, one is arranged on the outer edge side of the regulator board 32 and the other is arranged on the inner side.
By arranging the connectors 40 in staggered layout, larger space is provided between the adjacent connectors 40 in comparison to the connecters 40 arranged in line. Therefore, higher work efficiency and safety can be achieved.

In the backlight device 12, a plurality of the cold cathode tubes 17 are arranged on the inner surface side of the chassis 14 such that the axes thereof match the long-side direction of the chassis 14. The ends of the cold cathode tubes 17 are located in the side areas of the chassis 14 near the ends of the long sides of the chassis 14. The ends of the cold cathode tubes 17 are connected to the respective relay connectors 19. The harnesses 50 extend from the relay connectors 19 and project from the rear surface of the chassis 14. On the rear surface of the chassis 14, the regulator boards 32 having a rectangular shape are mounted near the long-side ends of the chassis 14, respectively. The connectors 40 are mounted on the regulator boards 32 in locations where they overlap the ends of the cold cathode tubes 17. Distal ends of the harnesses 50 are connected to the connectors 40. More specifically, the connectors 40 are arranged such that one connector 40 overlaps the ends of two cold cathode tubes 17 on one side. The adjacent connectors 40 are arranged such that one is located on the side close to the long-side edge of the regulator board 32 and the other is located on the inner side of the regulator board 32. Namely, locations of the connectors 40 with respect to the longitudinal direction of the regulator board 32 (or the short-side direction of the chassis 14) are determined based on the arrangement of the cold cathode tubes 17.

In this embodiment, the depth of the chassis 14 is 8.0 mm. In such a thin backlight device 12, the large number of the cold cathode tubes 17 should be installed so that a shadow of the arrangement pattern of the cold cathode tubes 17 is not produced by illumination light. Therefore, the cold cathode tubes 17 are arranged parallel to each other with a small pitch of 16.4 mm intervals. In the backlight device 12, in which the cold cathode tubes 17 are arranged with a small pitch of 10 mm to 24 mm intervals or even 10 mm to 17 mm, the connectors 40 arranged in a limited area on the regulator board 32 (corresponding the length of the long side of the regulator board 32) are also arranged at small intervals. To arrange the connectors 40 at small intervals, the adjacent connectors 40 may interfere with each other during mounting work and that makes the mounting work difficult. Further, electrical discharge may occur between the adjacent connectors 40.
In the present invention, the adjacent connectors 40 are arranged in staggered layout. Therefore, areas in which other connectors 40 are not arranged are provided on either side of each connector 40, namely, intervals between the connectors 40 are relatively large. This makes the connector mounting work easier and restricts the electrical discharge between the connectors 40. Therefore, high work efficiency and safety can be achieved.

In this embodiment, the connectors 40 include the first connector parts 41 mounted in the inverter board set 30 and the second connector parts 42 attachable to the first connector parts 41 in the direction substantially perpendicular to the surfaces of the inverter board set 30.

In each connector 40, to attach the second connector part 42 to the first connector part 41, the second connector part 42 is held and brought close to the first connector part 41 in the direction substantially perpendicular to the surface of the inverter board set 30. Especially in this embodiment, the second connector part 42 has stoppers 44 on the side walls. The stoppers 44 are elastically bent and engaged with the first connector part 41. Namely, the stoppers 44 need to be held by fingers during the mounting work. If the interval between the adjacent connectors 40 is small, the connector 40 that has been already mounted could be an obstacle for attaching another second connector part 42 to the connector 40 adjacent to it. Namely, the second connector part 42 or the fingers that hold the second connector part 42 may be obstructed by the adjacent connector 40.
In the present invention, the connectors 40 are arranged in staggered layout in the inverter board set 30. Therefore, the intervals between the connectors 40 are relatively large and thus attachment of the second connector parts 42 to the first connector parts 41 can be easily done without being obstructed by the adj acent connectors 40.

In this embodiment, the harnesses 50 extend from the second connector parts 42 of the connectors 40. Each harness 50 has the loop 51 that is provided by looping a part thereof. The size of the loop 51 can be variable.
With this configuration, the apparent length of the harness 50 can be adjustable by changing the size of the loop 51 even when the distance between the cold cathode tubes 17 and the respective connectors 40 is different from location to location because of the staggered layout of the connectors 40. Operational effects of the loop 51 will be explained with reference to FIGS. 11 and 12.

The distance between connectors 40a, which are arranged on the longitudinal edge side of the regulator board 32 among the connectors 40 arranged in two lines along the long-side direction of the regulator board 32, and the ends of the cold cathode tubes 17 is relatively small, as illustrated in FIG. 11. In this case, the loops 51a of the harnesses 50 are formed with a relatively large diameter and thus the apparent length of the harnesses 50 is small. As a result, the cold cathode tubes 17 and the connectors 40a can be connected via the harnesses 50 with an appropriate length.

The distance between connectors 40b, which are arranged on the inner side of the regulator board 32, and the ends of the cold cathode tubes 17 is relatively large, as illustrated in FIG. 12. In this case, the loops 51b of the harnesses 50 are formed with a relatively small diameter and thus the apparent length of the harnesses 50 is large. As a result, the cold cathode tubes 17 and the connectors 40a arranged at a relatively large distance can be connected.

As described above, even when the distances between the cold cathode tubes 17 and the connectors 40 are different from location to location, harnesses with different lengths are not required. By adjusting the apparent lengths of the harnesses 50, the harnesses 50 with the same length can be used to connect the cold cathode tubes 17 to the connectors 40 even when the distances between them are different. As a result, cost related to the harnesses 50 can be reduced and thus cost of the backlight device 12 can be reduced.

### <Second Embodiment>

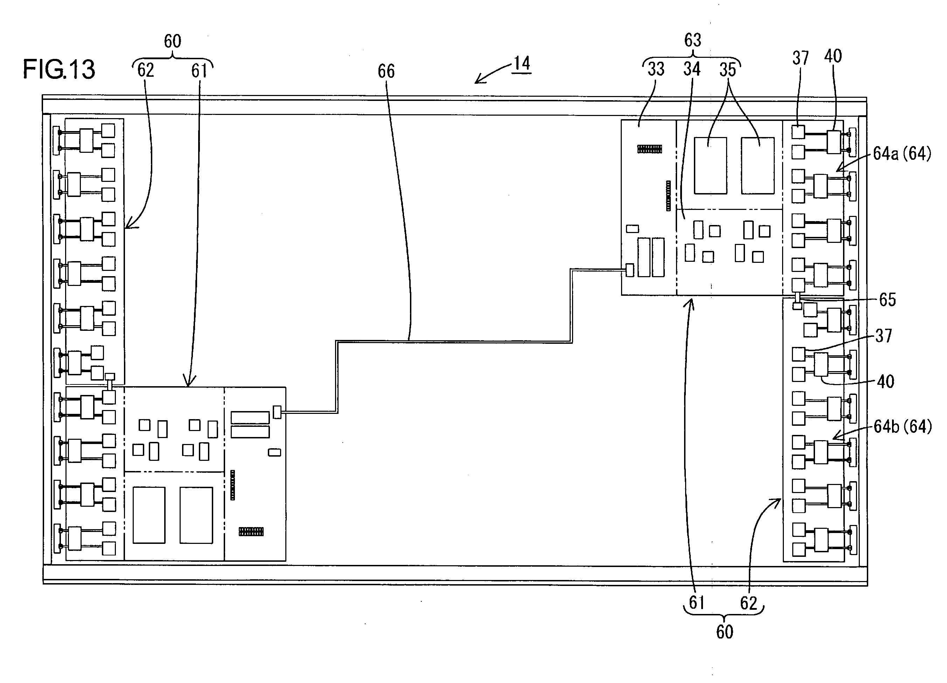

Next, the second embodiment of the present invention will be explained with reference to FIGS. 13 to 16. In the second embodiment, the configuration of the inverter board set is modified. Other configurations are the same as the first embodiment. The same parts as the first embodiment are indicated by the same symbols and will not be explained.

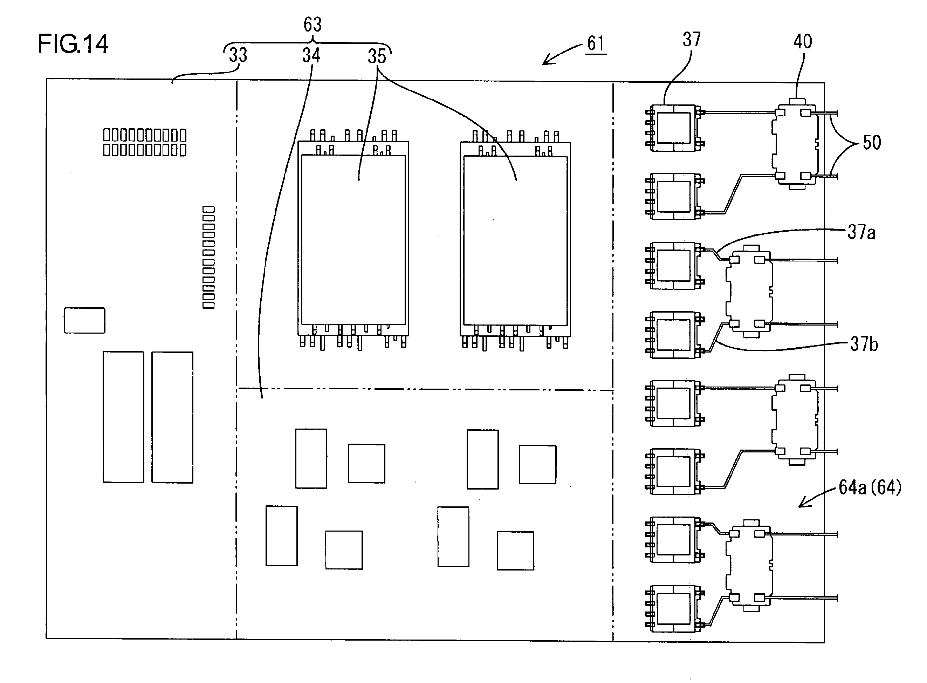

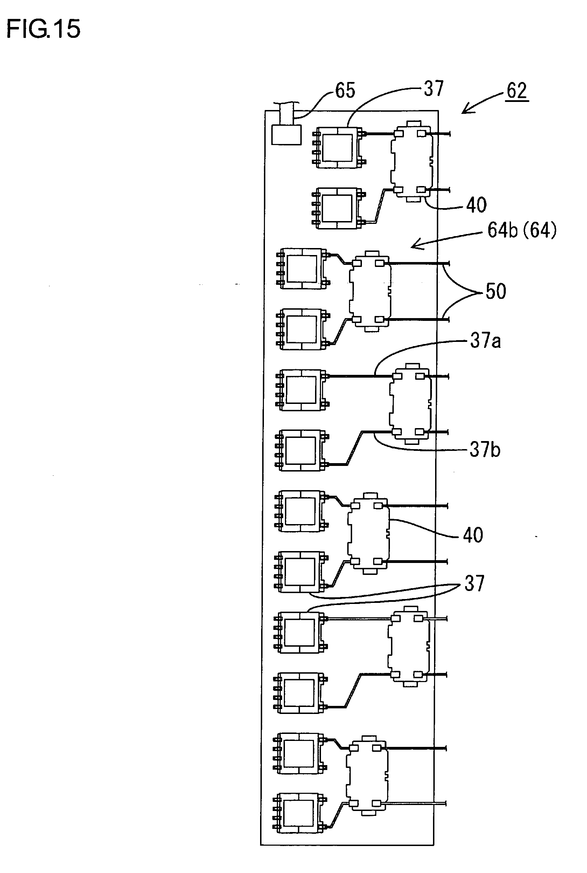

FIG. 13 is a plan view illustrating a configuration of an inverter board set according to this embodiment. FIG. 14 is a plan view illustrating the first board of the inverter board set in FIG. 13. FIG. 15 is a plan view illustrating the second board of the inverter board set in FIG. 13.

As illustrated in FIG. 13, the inverter board set 60 includes the first boards 61 and the second boards 62. Each first board 61 has a rectangular shape and each second board 62 has a rectangular shape narrower than the first board 61. The first board 61 and the second board 62 are arranged adjacent to each other with a small gap therebetween. The first boards 61 and the second boards 62 are arranged in side areas of the chassis 14 (areas close to the ends of the long side of the chassis 14 and overlapping the ends of the cold cathode tubes 17). In this embodiment, the first boards 61 are arranged diagonal to each other on the chassis 14, that is, along the different long sides of the chassis 14. The second boards 62 are arranged in the same manner.

The first boards 61 are arranged with the longitudinal direction thereof aligned along the long-side direction of the chassis 14. As illustrated in FIG. 14, each first board 61 includes a driver circuit 63 that includes the control circuit 33, the switching circuit 34 and the high voltage generator 35 on the inner side of the chassis 14. The control circuit 33 controls an output of the drive power of the cold cathode tubes 17. The switching circuit 34 switches the drive power supply on and off. The high voltage generator 35 outputs drive power. It further includes a regulator circuit 64 that includes eight flux couplers 37 and four connectors 40 on the outer side of the chassis 14, which is closer to the edge of the chassis 14 than the driver circuit 63. The flux couplers 37 are configured to adjust a balance of the current supply to the cold cathode tubes 17. The connectors 40 are configured to make electrical connection between the driver circuit 63 and the cold cathode tubes 17.
Namely, the driver circuit 63 and the regulator circuit 64a are adjacently provided on the first board 61. The drive power is supplied from the driver circuit 63 to the regulator circuit 64a through circuit patterns on the first board 61.

The second boards 62 are arranged with the longitudinal direction thereof aligned along the short-side direction of the chassis 14. Each of them includes a regulator circuit 64b. As illustrated in FIG. 15, twelve of the flux couplers 37 that are the same kind as the ones arranged on the first boards 61 are arranged along a long-side of the regulator board 62 on the inner side of the chassis 14. Six of the connectors 40 that are the same kind as the ones arranged on the first boards 61 are arranged along another long side of the regulator board 62 on the outer side of the chassis 14.
The regulator circuit 64 including the flux couplers 37 and the connectors 40 has two sections, the first regulator section 64a and the second regulator section 64b provided on the first board 61 on the second board 62, respectively.

The drive power output from the driver circuit 63 on the first board 61 is supplied to the second regulator section 64b on the second board 62 via the high voltage line 65 that connects the first board 61 to the second board 62. Because the first board 61 and the second board 62 are adjacently arranged with a small gab therebetween, the length of the high voltage line between the driver circuit 63 and the second regulator section 64b is very small.

The driver circuits 63 on the different first boards 61 along the long sides of the chassis 14 are connected with each other via a synchronizing signal line 66. The synchronizing signal line 66 is configured to transmit signals for synchronizing power supply from the driver circuits 63, 63. Specifically, the synchronizing signals are for synchronizing the amounts and the timing of the power supply. The synchronizing signal line 66 is routed from one side to the other side of the chassis 14 such that it is in contact with the chassis 14. The driver circuits 63 for supplying drive power to the respective ends of the cold cathode tubes 17 are connected to each other via the synchronizing signal line 66. Therefore, the drive power is supplied to the respective ends of the cold cathode tubes 17 with a predetermined regularity.

The backlight device 12 of this embodiment having such a configuration provides the following operational effects.
The inverter board set 60 included in the backlight device 12 of the present embodiment includes the regulator circuits 64 and the driver circuits 63. The regulator circuits 64 include the connectors 40 and adjust current balance between the cold cathode tubes 17. The driver circuits 63 supply drive power to the cold cathode tubes 17 via the regulator circuits 64. The inverter board set 60 includes different sections provided on the first boards 61 and the second boards 62. The first boards 61 and the respective second boards 62 are arranged with a small gap therebetween. Each regulator circuit 64 includes two sections, the first regulator section 64a and the second regulator section 64b on the first board 61 on the second board 62, respectively. The first board 61 on which the first regulator section 64a is provided further includes the driver circuit 63.

In the configuration, the first regulator section 64a and the driver circuit 63 are both provided on the first board 61. Therefore, the power is supplied from the driver circuit 63 to the first regulator section 64a via the circuit patterns on the board. Namely, high voltage lines used in known configurations for making connections between them are not required. Because the first board 61 and the second board 62 are adjacently arranged, only the minimum length is required for the high voltage line 65 that connect the driver circuit 63 on the first board 61 to the second regulator section 64b on the second board 62. This ensures a high level of safety. Further, even in the thin backlight device 12 where components are closely arranged, only small space is required around the high voltage lines 65. Therefore, the arrangement of the components can be designed at a high degree of flexibility.

Each regulator circuit 64 is configured to adjust the balance of currents flowing between the cold cathode tubes 17. For different arrangement patterns of the cold cathode tubes 17 (e.g., the different number of the tubes), different circuit patterns are required in the regulator circuit 64. In this embodiment, eight flux couplers 37 and four connectors 40 are provided on the first board 61, and twelve flux couplers 37 and six connectors 40 are provided on the second board 62. Namely, the regulator circuit 64 including the first and the second boards 61 and 62 includes twenty flux couplers 37 and 10 connectors 40. Therefore, the regulator circuit 64 supports twenty cold cathode tubes 17.

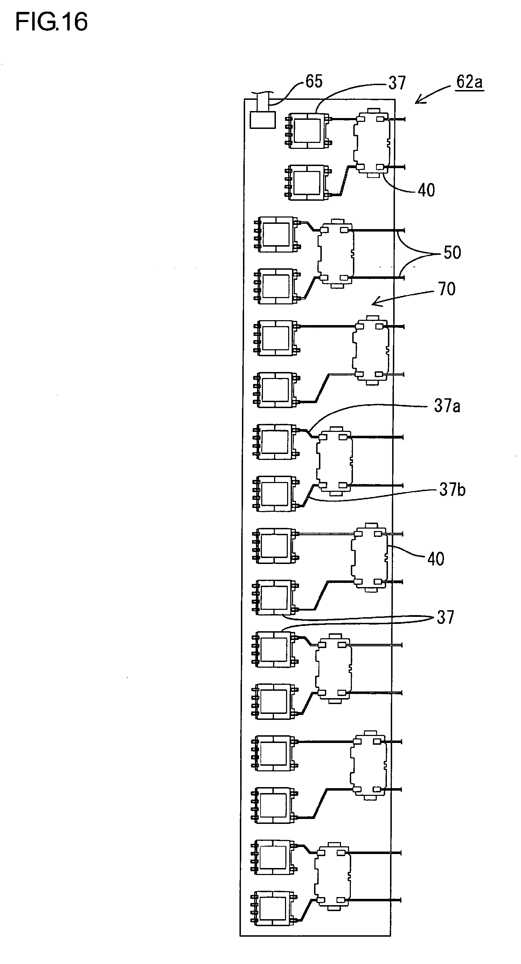

If the backlight device 12 is provided in a large size and requires a larger number of cold cathode tubes 17 (e.g., twenty-four tubes), an regulator circuit 70 including twenty-four flux couplers 37 and twelve connectors 40 is required. According to the configuration of the present invention, the regulator circuit 64 includes two sections, one on the first board 61 and the other on the second board 62. Therefore, to support a larger number of cold cathode tubes 17, only the second board 62 needs to be replaced by another board 62a having different circuit patterns. More specifically, as illustrated in FIG. 16, the second board 62 is replaced by the board 62a including sixteen flux couplers 37 and eight connectors 40. As a result, the regulator circuit 70 that is capable of supporting twenty-four cold cathode tubes 17 is prepared. The first board 61 including the regulator circuit 64a and the driver circuit 63 can be used in any size of the backlight device 12. This contributes to a cost reduction.

### <Other Embodiments>

The present invention is not limited to the above embodiments explained in the above description. The following embodiments may be included in the technical scope of the present invention, for example.

(1) In the second embodiment, each regulator circuit 64 includes two sections, one provided on the first board 61 and the other provided on the second board 62. However, the sections may be configured differently. For example, a regulator circuit including three sections provided on three boards. The regulator circuit should include at least two different sections provided on two different boards.

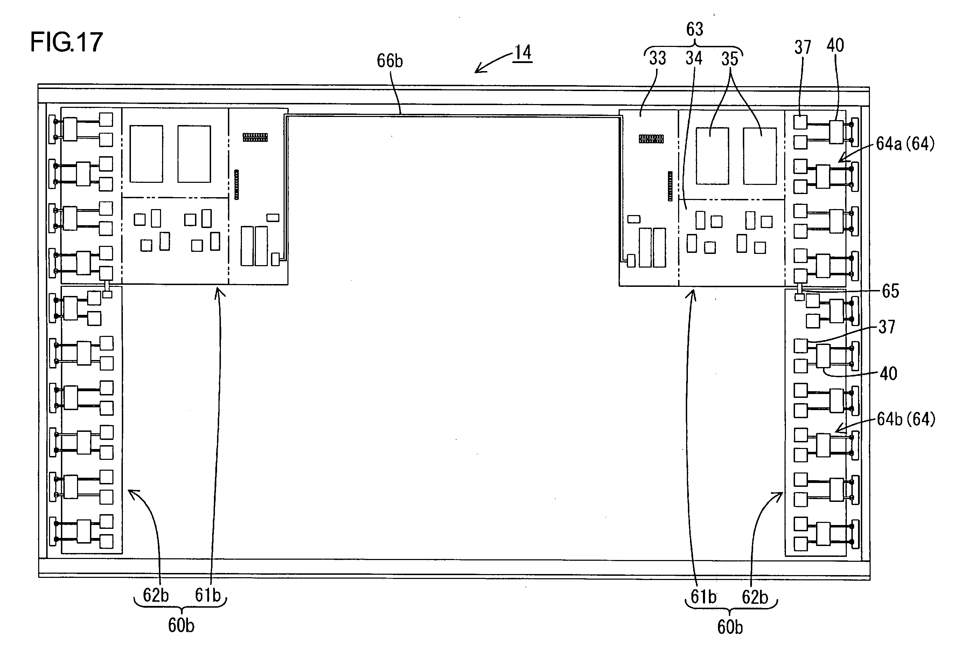

(2) In the second embodiment, the first boards 61 and the second boards 62 are arranged diagonally to each other and along the edges of the long-side direction with respect to the chassis 14. However, they may be arranged such as the first boards 61b and the second boards 62b as illustrated in FIG. 17. Namely, the first boards 61b are arranged close to one of the long sides of the chassis 14, and the second boards 62b are arranged close to the other long side of the chassis 14. In this case, a synchronizing signal line 66b for connecting the first boards 61b to each other should be routed along the long side of the chassis 14.
In the second embodiment, the first boards 61 and the second boards 62 are arranged diagonally to each other, respectively. Namely, they are arranged symmetrically with respect to a reference point. When they are arranged in such a manner, not only the second boards 62 but also the first boards 61 having the same circuit pattern can be used for different arrangements in the end areas of the chassis 14.

(3) In the above embodiments, the boards on which the regulator circuits are provided are arranged near the ends of the long side of the chassis 14. However, they may be arranged near only one of the ends of the long side of the chassis 14. In this case, a preferable configuration is that the drive power is supplied to the cold cathode tubes 17 via one of the ends.

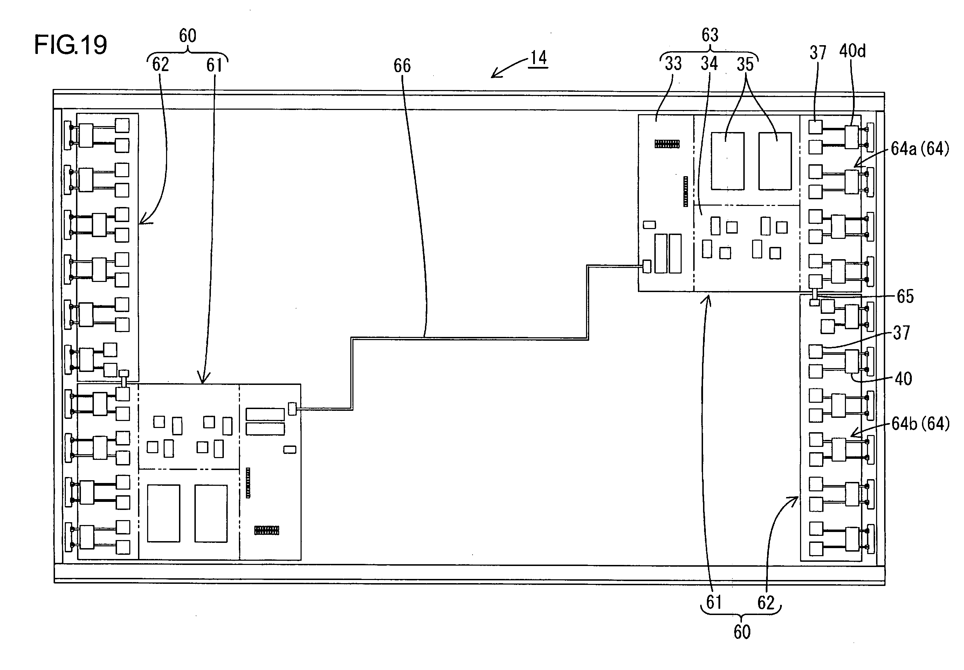

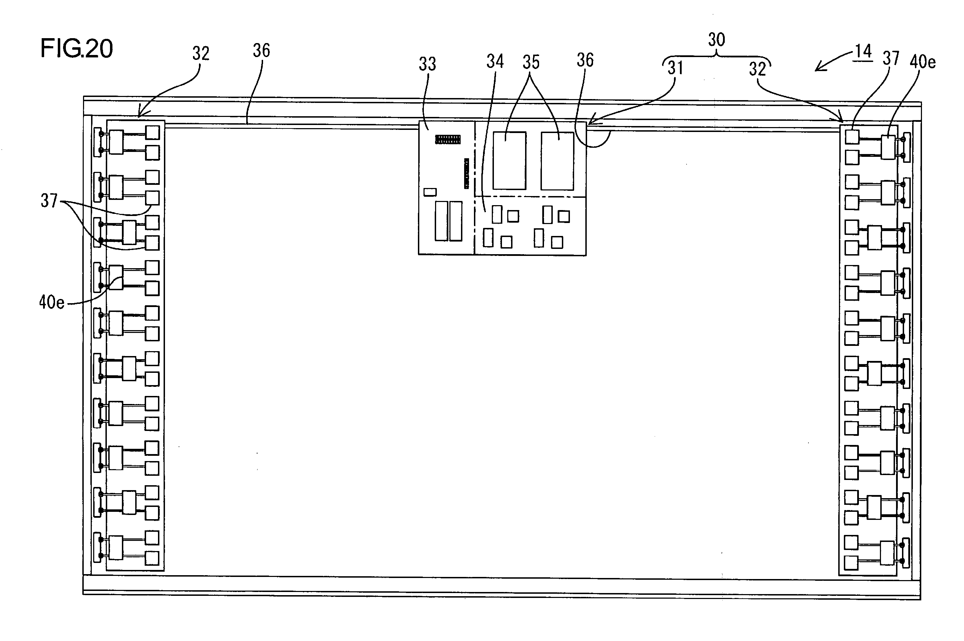

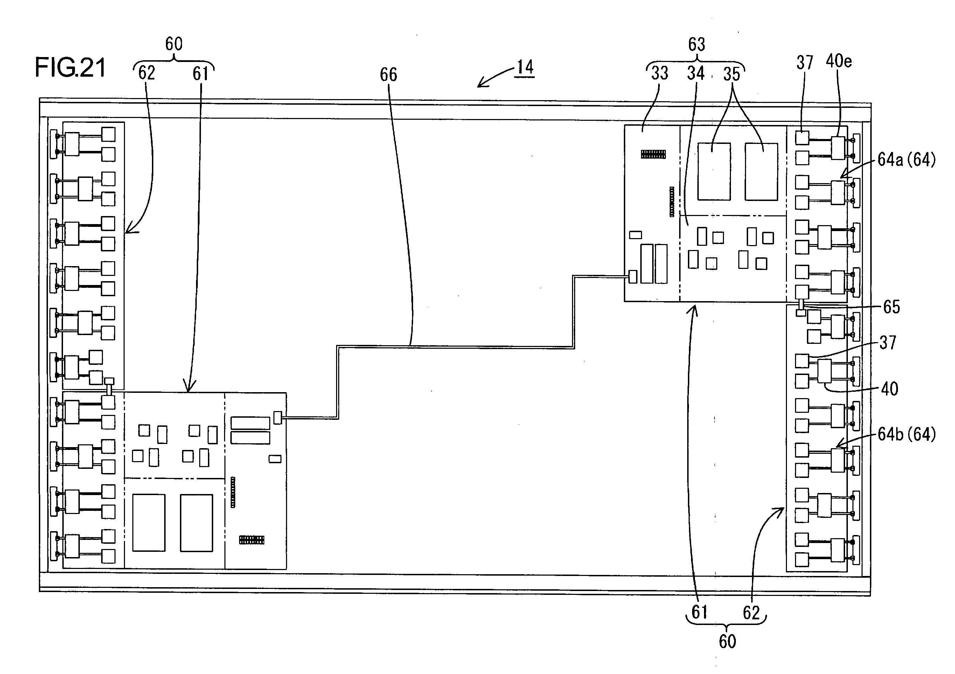

(4) In the above embodiments, the connectors 40 are arranged in staggered layout on two lines on each regulator board. One line is located along the long-side edge of the regulator board and the other located inside the line. However, they can be arranged in different layout as long as they are not arranged on a straight line. As illustrated in FIGS. 19 and 19, the connectors 40 may be arranged such that every two of them are aligned so as to form two lines. Specifically, the first connector 40d and the second connector 40d that is adjacent to the first connector 40d are arranged near the long-side edge of each regulator board, and the third connector 40d adjacent to the second connector 40d and the fourth connector 40d are arranged on the inner side. By arranging them in this manner, every two of the regulator boards 40d are alternately arranged so as to form two lines.
Other alternative staggered layouts of the connectors 90 are illustrated in FIGS. 20 and 21. Two connectors 40e and one connector 40e are arranged on two different lines, respectively. Specifically, the first connector 40e and the second connector 40e are arranged near the long-side edge of each regulator board, and the third connector 40e adjacent to the second connector 40e is arranged on the inner side. By arranging them in this manner, the connectors 40e are arranged such that two of them are arranged on one line and the adjacent one is arranged on the other line so as to form two lines.

(5) In the above embodiments, the cold cathode tubes 17 are used as light sources. However, other types of light sources including hot cathode tubes can be used.

## Claims

1. A lighting device comprising:
a plurality of light sources;
a power supply board configured to supply drive power to said light sources;
a plurality of connectors mounted on said power supply board for making electrical connection between said light sources and said power supply board,
wherein some of said connectors are arranged on a linear alignment line and at least one of said connectors arranged adjacent to any one of the some of said connectors is arranged off the alignment line.

2. The lighting device according to claim 1, wherein said connectors are arranged such that the one of the some of said connectors and two of said connectors arranged adjacent to any one of the some of said connectors are arranged in staggered layout.

3. The lighting device according to any one of claims 1 and 2, wherein said connectors are arranged in staggered layout.

4. The lighting device according to any one of claims 1 to 3, wherein said connectors include first connector parts mounted on said power supply board and second connector parts attached to said first connector parts, respectively, such that said second connector parts can be removed from said first connector parts in a direction perpendicular to a board surface of said power supply board.

5. The lighting device according to claim 4, wherein each of said second connector parts includes a stopper in an edge area thereof so as to engage with a corresponding one of said first connector parts with elastic flexibility.

6. The lighting device according to any one of claims 1 to 5, further comprising harnesses extending from said connectors for making electrical connection between said connectors and said light sources, wherein:
each of said harnesses has a loop that is a part thereof formed in a loop; and
said loop is variable in size.

7. The lighting device according to any one of claims 1 to 6, wherein:
said power supply board includes a first board and a second board on which said connectors are mounted and a regulator circuit and a driver circuit are provided, said regulator circuit being configured to adjust current balance between said light sources, said driver circuit being configured to supply drive power to said light sources;
said regulator circuit includes at least two sections provided on said first board and said second board, respectively; and
said driver circuit is provided on said first board on which one of the sections of said regulator circuit is provided.

8. The lighting device according to any one of claims 1 to 7, wherein said light sources are arranged at intervals between 10 mm and 24 mm.

9. The lighting device according to any one of claims 1 to 7, wherein said light sources are arranged at intervals between 10 mm and 17 mm.

10. A display device comprising:
the lighting device according to any one of claims 1 to 9; and
a display panel configured to provide display using light from said lighting device for a display device.

11. The display device according to claim 10, wherein the said display panel is a liquid crystal display panel using liquid crystal.

12. A television receiver comprising the display device according to any one of claims 10 and 11.
